# EUROPEAN PATENT APPLICATION

(11) **EP 1 804 034 A1**
(43) Date of publication of application: **04.07.2007**
(21) Application number: 05113033.4
(22) Date of filing: 28.12.2005
(51) Int. Cl.: G01D 5/26

(54) **A system for monitoring the position of a nozzle**

(71) Applicant: Advanced Mask Technology Center GmbH & Co. KG, 01109 Dresden (DE)
(72) Inventor: Wullinger, Michaela, 01099, Dresden (DE); Nesladek, Pavel, 01109, Dresden (DE)
(74) Representative: Kottmann, Heinz Dieter

(57) **Abstract**

The present invention refers to a system for monitoring the position of a nozzle (3a, 3b) forming part of a processing tool in which liquids (5a, 5b) are sprayed by means of the nozzle (3a, 3b). In particular, the system comprises a light source (6a, 6b) emitting a light beam (7a, 7b), the light source (6a, 6b) being disposed at a fixed position, a light reflecting element (16a, 16b) mounted on the nozzle (3a, 3b) at a fixed position, the light reflecting element (16a, 16b) being adapted to reflect the light beam (7a, 7b) emitted by the light source (6a, 6b), and a detecting device (11) being disposed at a fixed position.

The detecting device (11) can be implemented as a scale (9a, 9b) or as a set of scales. By monitoring the impingement position (19a, 19b) of the reflected light beam (8a, 8b), the position of the nozzle (3a, 3b) can be monitored.

## Description

The present invention relates to a system for monitoring the position of a nozzle, the nozzle forming part of a processing tool in which liquids are sprayed by means of the nozzle. In addition, the invention further relates to a system for controlling the position of such a nozzle.

In wet processing tools which are commonly used, for example, in semiconductor industries for spraying liquids such as etching fluids, development liquids and others onto a substrate to be processed, the nozzles which spray the liquid onto the substrate are usually mounted at a fixed position in the housing of the tool. Sometimes it becomes necessary to remove a nozzle from the predetermined position, for example for repairing or maintaining the nozzle. After completing the maintenance procedure or the repairing process, the nozzle is mounted again into the predetermined position. In commonly used etching tools, for example two to four nozzles are mounted in one housing. After putting the nozzles at their predetermined positions, it is necessary to exactly adjust the position of the nozzles so as to obtain the initial state of the tool which has been present before the removal of the nozzles.

Conventionally, the exact position of the nozzles has been determined by taking a picture of the liquids sprayed onto the substrate before the removal of the nozzles. After mounting again the nozzles, the liquid is sprayed onto the substrate again and pictures are taken from the substrate with the liquid sprayed thereon. The adjustment is repeated until the spot of the sprayed liquids is centered on the substrate. Thereafter, a further adjustment step is performed using a substrate which is similar to the product to be produced, and the liquid is sprayed upon this substrate again. Pictures are taken of the substrate including the sprayed liquid and the adjustment step is repeated until the image of the sprayed liquids is similar to the image which was taken before the removal of the nozzles. To be more specific, the adjustment step is repeated until the shape of the running liquids on the substrate surface, in particular, the wafer or the mask surface, resembles the previously recorded shape.

Since usually the nozzles can be moved by about 0.1 to 3 mm, there is a large margin for the correct positioning of the nozzles. Accordingly, the correct adjustment of the nozzles is a troublesome process, in particular, if two or more nozzles have to be adjusted.

In view of the above, it is an object of the present invention to provide a system for monitoring the position of a nozzle forming part of a processing tool in which liquids are sprayed by means of the nozzle. Moreover, it is an object of the present invention to provide a system for controlling the position of such a nozzle.

According to the present invention, the above objects are achieved by a system for monitoring the position of a nozzle forming part of a processing tool in which liquids are sprayed by means of the nozzle, the system comprising a light source emitting a light beam, the light source being disposed at a fixed position, a light reflecting element mounted on the nozzle at a fixed position, the light reflecting element being adapted to reflect the light beam emitted by the light source, and a detecting device being disposed at a fixed position.

Accordingly, the system comprises a light source, which can, for example, be a usual laser light source, in particular, a laser diode. The light source is disposed at a fixed position. In particular, the light source can be mounted on the housing of the tool. In addition, the system comprises a light reflecting element mounted on the nozzle at a fixed position. In particular, the light reflecting element can be a mirror. For example, the mirror can form part of the nozzle or it can be detachably mounted on the nozzle. If the mirror forms part of the nozzle, the problem may arise that the mirror becomes contaminated in the course of time. Nevertheless, if the mirror forms part of the nozzle, the advantage is achieved that no problems with the correct adjustment of the mirror on the nozzle arise.

Alternatively, the mirror can be detachably mounted on the nozzle.

The detecting device can, for example, be a scale from which the reflected light beam can be read by an operator.

Preferably, the system further comprises a second scale which is rotated with respect to the first scale. For example, the second scale can be rotated by 90° with respect to the first scale. Nevertheless, the second scale can be rotated by any arbitrary angle provided that the first and the second scale are not parallel to each other. In this case it is possible to monitor the position of the nozzle with respect to two directions.

Nevertheless, the detecting device can as well be implemented as a photodetector as is commonly used. In particular, the photodetector should be implemented as a photodetector extending in two directions so as to assure that the reflected light beam will impinge on the photodetector.

In addition, the present invention provides a system for controlling the position of a nozzle forming part of a processing tool in which liquids are sprayed by means of the nozzle, the system comprising a light source emitting a light beam, the light source being disposed at a fixed position, a light reflecting element mounted on the nozzle at a fixed position, the light reflecting element being adapted to reflect the light beam emitted by the light source, a detector being disposed at a fixed position, the detector detecting the light beam reflected by the light reflecting element and a motor being connected with a detector so as to receive a signal submitted by the detector, the motor being adapted to adjust the nozzle in response to the signal submitted by the detector.

Again, according to this embodiment, the light reflecting element may be a mirror. In particular, according to this embodiment of the present invention the detecting device can be adapted to automatically measure the position of the reflected light beam in two dimensions, for example, with reference to an x- and an y-axis of the tool. The detecting device submits a signal to a motor which is connected with the detecting device. In response to the signal submitted by the detecting device, the motor adjusts the position of the nozzle.

Accordingly, the present invention further provides a system which automatically controls the position of the nozzle so that the preset position of the nozzle is re-adjusted.

The systems of the present invention are applicable to any kinds of nozzles forming part of a wet processing tool. In particular, the nozzles, which are to be adjusted by the method of the present invention can form part of a wet etching tool, a development tool or any arbitrary tool which sprays liquids onto a substrate to be processed. The liquid which can be sprayed by means of the nozzles can be any liquid including etchants, developing liquids, water and others. The present invention can in particular be used for semiconductor or photomask processing tools. The tools can comprise 1, 2 or 4 and even more nozzles. In addition, the system can comprise light sources in a number corresponding to the number of nozzles to be adjusted.

In the following, the present invention will be described in greater detail with reference to the accompanying drawings in which
- Fig. 1: illustrates a system for monitoring the position of a nozzle according to the present invention,
- Fig. 2: illustrates a system for controlling the position of a nozzle according to the present invention,
- Fig. 3A: shows a nozzle comprising a mirror according to a first embodiment of the present invention,
- Fig. 3B: illustrates a nozzle comprising a mirror according to a second embodiment of the present invention, and
- Fig. 4: schematically illustrates a process for controlling the position of a nozzle.

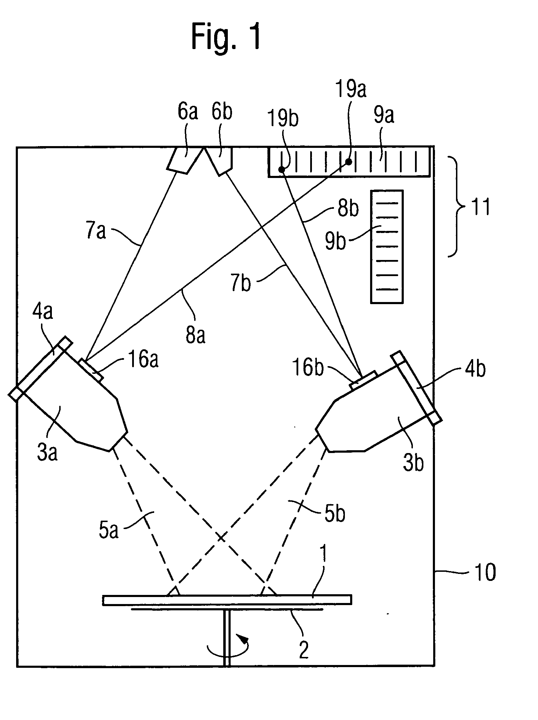

Fig. 1 schematically illustrates a wet processing tool including a system for monitoring the position of a nozzle. As is shown in Fig. 1, a substrate 1 to be processed is disposed on a substrate holder 2. The substrate to be processed can be any arbitrary substrate which can for example, be made of a semiconductor, a conductive or an isolating material. In particular, the substrate 1 to be processed can be a semiconductor substrate such as a silicon substrate, or it can be a substrate for forming a photomask, in particular, a quartz substrate.

The substrate holder 2 usually is rotatable. The whole wet processing tool is housed in a housing 10. In the shown embodiment, the wet processing tool comprises two nozzles 3a, 3b, which are attached to the housing 10. The nozzles 3a, 3b are fixed to the housing by means of fixing elements 4a, 4b. During operation, liquids 5a, 5b are sprayed onto the substrate 1 by means of the nozzles 3a, 3b. The system for monitoring the position of the nozzles 3a, 3b comprises light sources 6a, 6b which are disposed at a fixed position, respectively. The number of the light sources generally corresponds to the number of nozzles to be adjusted. In particular, the light sources 6a, 6b can be attached to the housing 10 of the tool. The light sources 6a, 6b emit a light beam 7a, 7b. Mirrors 16a, 16b are mounted at a fixed position on the nozzles 3a, 3b. The number of mirrors corresponds to the number of nozzles to be adjusted. The light beams 7a, 7b are reflected by the mirrors 16a, 16b, thus forming the reflected beams 8a, 8b. The reflected light beams 8a, 8b impinge on the detecting device 11. In particular, the detecting device 11 can be a photodetector as is commonly used. Alternatively, the detecting device can as well comprise a scale 9a, 9b. In this case, the exact impingement position 19a, 19b of the reflected light beam 8a, 8b can be assessed by an operator, for example, by reading the scale 9a, 9b.

In addition, a second scale 9b can optionally be provided, the second scale being arranged so as to extend in a direction which is different from the direction of the first scale. In particular, the second scale 9b can be arranged perpendicularly with respect to the first scale. By reading the impingement position 19a, 19b of the reflected light beam with reference to the second scale 9b, the position of the reflected light beam 8a can be determined in a second direction and, thus, enables the correct positioning of the nozzles in the second direction.

Alternatively, the detecting means can as well be a photodetector 11 which automatically assesses the impingement position 19a, 19b of the impinging light beam 8a.

Likewise, for the second nozzle 3b, an additional light source 6b is provided emitting a light beam 7b which is reflected by the mirror 16b that is disposed on the second nozzle 3b. The reflected light beam 8b is detected in a similar manner by the detecting device 11 which can comprise a first and a second scale 9a, 9b.

The position of a nozzle forming part of a wet processing tool can be monitored using the system illustrated in Fig. 1 as follows. Starting from the wet processing tool in operation, in a first step (reference measurement), the light beam 7a is emitted by the light source 6a, reflected by the mirror 16a and impinges on the housing of the tool. The impingement position 19a, 19b of the reflected light beam with respect to the first and optionally, second scale can be visually assessed by an operator. The impingement position 19a, 19b of the reflected light beam is recorded, for example, on a piece of paper. This measurement step is repeated for any of the nozzles to be dismounted and re-adjusted. Thereafter, the nozzle 3a is dismounted from the housing, repaired, cleaned and again mounted on the housing 10. Thereafter, a further measurement is taken in the same manner as in the reference measurement which was conducted before the dismounting of the nozzle. In particular, a light beam is emitted by the light source 6a and the light beam 7a is reflected by the mirror 16a, thus forming the reflected light beam 8a which again impinges on the housing of the tool. The impingement position 19a, 19b of the reflected light beam 8a is again visually assessed by reading the first and, optionally, second scale. The operator compares the impingement position 19a, 19b of the reflected light beam with the recorded impingement position of the reference measurement step and manually adjusts the position of the nozzle so that finally the position of the reflected light beam 8a on the housing is identical with the recorded position from the reference measurement step. Then, the adjustment procedure of the nozzle is completed. The adjustment procedure can as well be applied to a plurality of nozzles by subsequently performing the measurement and adjustment steps as have been described hereinbefore.

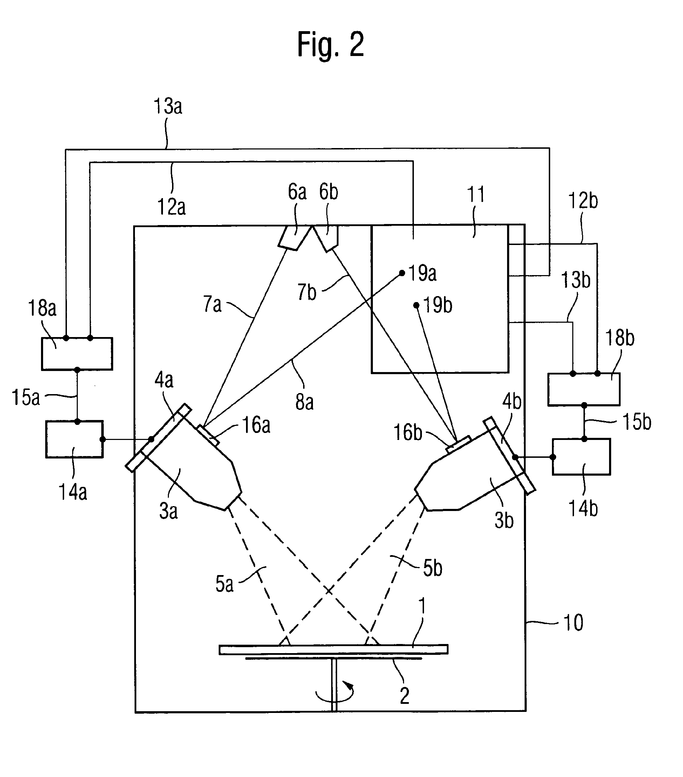

Fig. 2 shows a second embodiment of the present invention relating to a system for controlling the position of a nozzle. As is shown in Fig. 2, the system for controlling the position of a nozzle comprises light sources 6a, 6b emitting light beams 7a, 7b, wherein each of the light sources is disposed at a fixed position, respectively. Similar to the first embodiment, each of the light sources 6a, 6b is disposed at a fixed position and it can, in particular, be mounted at the housing of the processing tool. In addition a mirror 16a, 16b is mounted on each of the nozzles, respectively, at a fixed position, and each of the mirrors 16a, 16b reflects a corresponding light beam 7a, 7b which has been emitted by one of the light sources 6a, 6b respectively. The system according to the second embodiment further comprises a detector 11 which is disposed at a fixed position. In particular, the detector detects the light beam 8a, 8b which has been reflected by the mirror and detects the impingement position 19a, 19b of the reflected light beam 8a, 8b. A control device 18a, 18b may be provided so as to receive a position signal from the detector 11 via the lines 12a, 13a, 12b, 13b. The control device 18a, 18b determines an amount of adjustment based on these position data. A signal is transmitted to the motor 14a, 14b via the line 15a, 15b so as to cause the motor 14a, 14b to actuate the nozzle 3a, 3b by a predetermined amount, respectively. Accordingly, the motor 14a, 14b is provided and connected with the nozzle 3a, 3b so as to actuate the nozzle 3a, 3b in response to a signal submitted by the control device 18a, 18b. The first motor 14a actuates the first nozzle 3a, whereas the second motor 14b actuates the second nozzle 3b. According to the second embodiment of the present invention, the detector 11 should be a detector having a spatial extension so as to make sure that the reflected light beam impinges on the detector. The detector determines the impingement position 19a, 19b of the reflected light beam with respect to two dimensions, for example, the x- and the y-coordinate of the system.

The system according to the second embodiment further comprises a memory device for storing the position of the reflected light beam. The memory device can form part of the detector 11, or it can be a separate device which is connected with the detector.

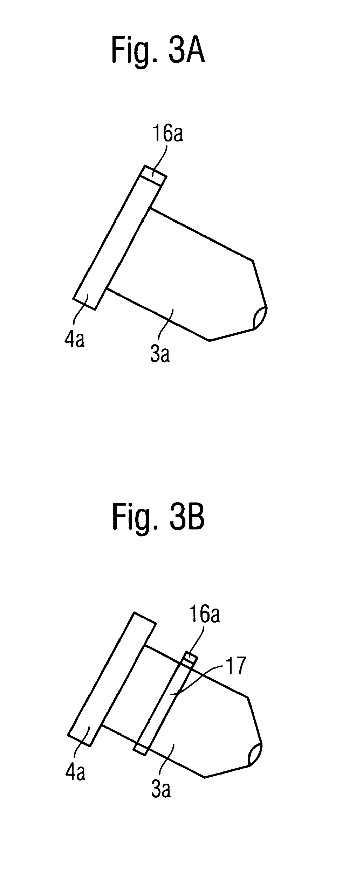

Figs. 3A and 3B illustrate the nozzle with the mirror mounted at a fixed position thereon in greater detail.

To be more specific, according to the implementation of the nozzle which is shown in Fig. 3A, the mirror 16a can be fixedly attached to the nozzle. Differently stated, the mirror 16a can form part of the nozzle or it can at least form part of the fixing element 4a by which the nozzle is mounted on the housing of the tool. In this respect, the mirror can be fixed on the fixing element 4a by means of an adhesive. Likewise, the mirror 16a can be fixed on the surface of the nozzle 3a as well, for example, using an adhesive.

Alternatively, as is shown in Fig. 3B, the mirror 16a can be fixed on the nozzle 3a by means of a mounting clip 17. In this case, the mirror can be removed from the nozzle 3a. As a consequence, contamination of the mirror is not likely to occur. In particular, the correct positioning of the mirror on the nozzle 3a can be assured by putting a mark on the nozzle so as to place the mirror 16a at a fixed position of the nozzle 3a.

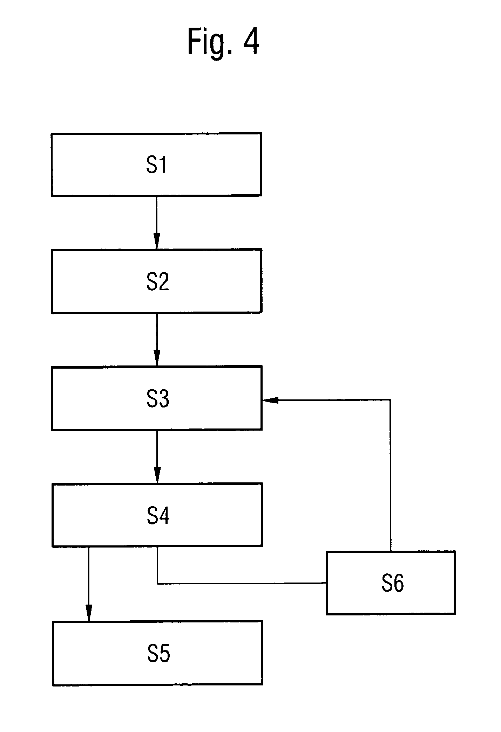

Fig. 4 schematically illustrates the method for controlling the position of a nozzle forming part of a processing tool, which can be performed using the system of the present invention. Starting from the wet processing tool in operation, in a first step S1, the light beam 7a is emitted by the light source 6a, reflected by the mirror 16a and detected by the detector 11. The impingement position 19a of the reflected light beam is recorded in a suitable memory means. This measurement step is repeated for any of the nozzles to be dismounted and re-adjusted. Thereafter, the nozzle 3a is dismounted from the housing, repaired, cleaned and again mounted on the housing 10 (step S2). Thereafter, in step S3, a measurement is taken in the same manner as in the reference measurement performed in step S1. In particular, a light beam is emitted by the light source 6a and the light beam 7a is reflected by the mirror 16a, thus forming the reflected light beam 8a which is detected by the detector 11a. Step S4 is a comparison step, wherein this measured position of the reflected light beam 8a is compared with the recorded position of the reference measurement step S1. If the measured position of step S4 coincides with the recorded position, which has been measured in the reference measurement step S1, the procedure is completed and the process goes to step S5, thus terminating the process for the particular nozzle

If, on the other hand, the measured position does not coincide with the measured position from the reference measurement step S1, an adjustment step is performed. In particular, in this adjustment step S6 the motor 14a actuates the nozzle 3a so as to move it to the recorded position. In particular, the adjustment step S6 can be performed in arbitrary manners. For example, a control device 18a can be provided, which determines the amount of adjustment based on the difference between the actually measured position and the reference position. Alternatively, the motor 14a can be adapted to adjust the position of the corresponding nozzle by a small amount, so as to determine the correct position of the nozzles 3a by an iterative method. After the adjustment step S6, a measurement step S3 is again performed, followed by a comparison step. As soon as the reference position of the nozzle is reached, the process of controlling the position of the particular nozzle 3a is terminated. Thereafter, the procedure is repeated for any of the other nozzles to be adjusted.

### List of references

- 1: substrate
- 2: substrate holder
- 3a, 3b: nozzle
- 4a, 4b: fixing element
- 5a, 5b: sprayed liquid
- 6a, 6b: light source
- 7a, 7b: emitted beam
- 8a, 8b: reflected beam
- 9a, 9b: scale
- 10: housing
- 11: detecting device
- 12a, 12b: line
- 13a, 13b: line
- 14a, 14b: motor
- 15a, 15b: line
- 16a, 16b: mirror
- 17: mounting clip
- 18a, 18b: control device
- 19a, 19b: impingement position

- S1: reference measurement step
- S2: dismounting/mounting step
- S3: measurement step
- S4: comparison step
- S5: end
- S6: adjustment step

## Claims

1. A system for monitoring the position of a nozzle (3a, 3b) forming part of a processing tool in which liquids (5a, 5b) are sprayed by means of the nozzle (3a, 3b),
the system comprising:
- a light source (6a, 6b) emitting a light beam (7a, 7b), the light source (6a, 6b) being disposed at a fixed position,
- a light reflecting element (16a, 16b) mounted on the nozzle (3a, 3b) at a fixed position, the light reflecting element (16a, 16b) being adapted to reflect the light beam (7a, 7b) emitted by the light source (6a, 6b),
and
- a detecting device (11) being disposed at a fixed position.

2. The system according to claim 1, wherein the detecting device (11) comprises a scale (9a, 9b).

3. The system according to claim 2, further comprising a second scale (9b) which is rotated with respect to the first scale (9a) .

4. The system according to any of claims 1 to 3, wherein the light reflecting element (16a, 16b) forms part of the nozzle (3a, 3b).

5. The system according to any of claims 1 to 3, wherein the light reflecting element,(16a, 16b) is detachably mounted on the nozzle (3a, 3b).

6. A system for controlling the position of a nozzle (3a, 3b) forming part of a processing tool in which liquids (5a, 5b) are sprayed by means of the nozzle (3a, 3b), the system comprising:
- a light source (6a, 6b) emitting a light beam (7a, 7b), the light source (6a, 6b) being disposed at a fixed position,
- a light reflecting element (16a, 16b) mounted on the nozzle (3a, 3b) at a fixed position, the light reflecting element (16a, 16b) being adapted to reflect the light beam (7a, 7b) emitted by the light source (6a, 6b),
- a detecting device (11) being disposed at a fixed position, the detecting device (11) being adapted to detect the light beam (7a, 7b) reflected by the light reflecting element (16a, 16b), and
- a motor (14a, 14b) being connected with the detecting device (11) so as to receive a signal submitted by the detecting device (11), the motor (14a, 14b) being adapted to adjust the nozzle (3a, 3b) in response to the signal submitted by the detecting device (11).

7. The system according to claim 6, wherein the light reflecting element (16a, 16b) forms part of the nozzle (3a, 3b).

8. The system according to claim 6, wherein the light reflecting element (16a, 16b) is detachably mounted on the nozzle (3a, 3b).
